(19) Europäisches Patentamt
European Patent Office
Office européen des brevets

(11) **EP 4 502 826 A1**

(12) **EUROPEAN PATENT APPLICATION**

(43) Date of publication:
**05.02.2025 Bulletin 2025/06**

(21) Application number: **24192103.0**

(22) Date of filing: **31.07.2024**

(51) International Patent Classification (IPC):
*G06F 16/587* (2019.01)   *H04W 4/02* (2018.01)

(52) Cooperative Patent Classification (CPC):
**H04W 4/02;** G06F 16/587

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 US 202363516581 P**

(71) Applicant: **Dassault Systemes SolidWorks Corporation**
**Waltham, MA 02451-1223 (US)**

(72) Inventors:
• **Grimaud, Jean-Jacques**
**Winchester (US)**
• **Schaller, Thomas**
**Colomiers (FR)**

(74) Representative: **Bandpay & Greuter**
**11 rue Christophe Colomb**
**75008 Paris (FR)**

(54) **SYSTEM AND METHOD FOR RETRIEVAL OF TWO DIMENSIONAL DRAWINGS**

(57)    A system and method for accessing a remotely located two dimensional (2D) drawing via a mobile device at a work site includes a reference device at the work site configured to provide a geographical reference to the mobile device. A document retrieval system is configured to access the plurality of 2D drawings in a document repository. The mobile device provides an annotated document to the document retrieval system. The document retrieval system accesses the 2D drawing in the document repository based on the annotated document, and provides a rasterized version of the 2D drawing to the mobile device.

FIG. 2

**Description**

FIELD OF THE INVENTION

The present invention relates to document retrieval systems, and more particularly, is related to remote access to geographically tagged two dimensional CAD drawings.

BACKGROUND OF THE INVENTION

In business to business (B2B) domains, workers may require two dimensional (2D) drawings to facilitate or even perform work related tasks. Major B2B domains include:

- architecture, engineering, and construction (typically involving documents directed to assets such as buildings, structures, and infrastructures),
- cities, territorialities, and public services (where 2D drawings may be directed to, for example, regions, departments, states, counties, and municipalities),
- large assets (where 2D drawings may be related to, for example, assets such as marine & offshore, chemical, nuclear, utilities), and
- manufacturing (where 2D drawings may be related to, for example, discrete, batch, and/or continuous manufacturing).

2D drawings are also used for other B2B activity domains covering human work, and business to consumer (B2C) or business to business to consumer (B2B2C) for the general public, in particular interior design, for example HomeByMe.
2D Drawings for these domains (and others) may cover the lifetime of work sites involved from cradle to grave and rehabilitation of the land. Uses for these 2D Drawings are typically collaborative but can also be individual.
Work tasks for above-mentioned domains may involve some team members working in offices, typically remotely from a site, and other team members working on the site.
Typically, only a minority of team members have global views of the tasks with 3D CAD models, and 2D drawings and 2D rasterized drawings. Current software tools generally address their needs, and their views of the project highlights the collective operations.
In contrast, most of the work of workers on site cover only a given task or process at a time, and are in most cases only supported by 2D vector drawings (2D drawings with vector graphic formats that do not inherently include geographic coordinates) and 2D rasterized drawings. Several workers may be working at the same time on the same process, performing their tasks until the tasks are completed. When several workers perform the same task, their tasks are executed in parallel, but are not necessarily synchronized.
Workers often need access to relevant 2D rasterized drawings for work tasks. For example, worker may:

- want to refer to the relevant 2D rasterized drawings for their task,
- encounter issues coming from many different causes or the status of completion of the task,
- want to relate each issue and/or completion status and communicate it to the appropriate team,
- propose a solution to fix the issue, and/or
- try to solve problems locally on site, if possible.

Both the effective management and optimization of its individual business processes, (each process being a set of tasks defined in a graphical representation diagram such as BPMN), and the monitoring of their execution and their interdependencies may impact the success of a project.
There is a need for better tools to improve productivity with 2D drawings and 2D rasterized drawings provided amongst workers in a timely manner, and the related document management on the site and remote offices. Presently, global views may problematically obscure the importance of individual tasks constituting business processes and their management.
Most of the work done in the above-mentioned B2B domains involve 2D drawings and 2D rasterized drawings. Most assets have 100s, 1000s or even more 2D drawings and 2D rasterized drawings to be used on site. Many architects are still using 3D modeling with the primary purpose of creating 2D drawings.
The tools presently available to workers onsite may inhibit overall productivity in the above-mentioned domains, as productivity lags well behind other industries, in particular manufacturing. For example, in the US construction sector, the value added per Full-Time Equivalent worker in 2019 was the same as the one in 1950 (Becker Friedman Institute). In recent decades there have been few significant advances in commonly used on-site 2D drawing tools provided to construction workers.

While document retrieval has been improved by use of a repository creating a single source of truth and supporting collaborative work through codified processes such as check-in check-out, the user has still to gain access to that single repository, apply filters and search on keywords inside the repository (or write a query as an SQL) to retrieve relevant data for a document, including a 2D drawing or a 2D rasterized drawing.

While consumer devices are available to locate other objects or to determine their own location, their inaccuracy makes them unreliable for pinpointing the true on-site location for professional work.

2D drawings use vector graphic formats that do not inherently include geographic coordinates. For example, in .DWG format drawings, the coordinate system used is a right-handed Cartesian coordinate system, where the X-axis represents the horizontal direction, the Y-axis represents the vertical direction, and the Z-axis represents the depth or elevation, without a built-in structure for storing geographic coordinates (latitude, longitude, and elevation). Other systems such as Geographic Information Systems (GIS) rely on a separate representation of 2D drawings with different formats.

Current software for including geographic coordinates in 2D drawing formats has significant limitations. For example, some solutions enable adding geographic coordinates to some selected reference points of a specific 2D drawing. However, such a 2D drawing typically represents a general site plan or layout of the intended construction, but not in the other 2D drawings. The selected reference points correspond to specific geo-located, geodetic points, such as corners or borders of a unified parcel, and some points on the perimeter of the asset. The permitting process for any asset on the site requires the referencing of these geodetic points. Their precise locations are measured on site by expert surveyors using a measurement system, typically UTM (Universal Transverse Mercator).

Office employees spend significant time searching for relevant 2D drawings and 2D rasterized drawings that have been converted to digital form. As an example, an office employee of a municipality in France typically spends, on average, 90 minutes each day searching for relevant 2D drawings and 2D rasterized drawings.

While an on-site worker may have access to the relevant 2D rasterized drawings at the start of the planned task, solutions assigning 2D rasterized drawings for each worker task typically do not account for issues happening during the execution of on-site work such as reassignments of workers, delays due to supply chain issues, quality of material or equipment, or removal of previous work. When the worker does not have the relevant 2D rasterized drawings, his retrieval of the relevant 2D rasterized drawings necessitates that he has access to a mobile device, and has sufficient informational and vocabulary knowledge to access a repository of 2D drawings with a mobile device, select filters related to his current work, and search the repository with keywords to get the relevant 2D drawing(s). Alternatively, the worker must request assistance on site or through a call, to a colleague at an office, or through a help line, in order to find the relevant 2D drawing(s), in general in a rasterized form.

Most reference devices used for Indoor Positioning Systems (IPS) are quite accurate at small distances to locate a smartphone, or when in direct line of sight, but are not very accurate in normal use conditions indoor within an asset. The coverage of a reference device is limited to the area where location information is available from a mobile device. As the coverage area increases, accuracy decreases. Some expensive systems requiring antennas, readers, tags, a greater demand for power, as well as configuration and installation, may have better accuracy for a given use case.

When design of the asset uses a 3D model, the 3D design model does not always reflect the current state of the asset as built or as serviced in available As-Built or As-Serviced 2D drawings may not have been updated. Deriving information from the design 3D model does not guarantee correctness unless it is a perfect digital twin maintained through its lifecycle.

Some applications reference a BIM model, such as Dalux Field software. Here, document retrieval requires access to the repository, defining filters and defining keywords for the query. Unfortunately, their scope of use is limited to new assets. Many assets were not built using a BIM model, and even today, many new assets do not use BIM as a design methodology. When there is no BIM model available, only 2D drawings and 2D rasterized drawings are available and such applications do not cover these cases.

Therefore, there is a need in the industry to address one or more of the abovementioned shortcomings.

SUMMARY OF THE INVENTION

Embodiments of the present invention provide a system and method for retrieval of two dimensional drawings. Briefly described, the present invention is directed to a system and method for accessing a remotely located two dimensional (2D) drawing via a mobile device at a work site. A reference device at the work site is configured to provide a geographical reference to the mobile device. A document retrieval system is configured to access the plurality of 2D drawings in a document repository. The mobile device provides an annotated document to the document retrieval system. The document retrieval system accesses the 2D drawing in the document repository based on the annotated document, and provides a rasterized version of the 2D drawing to the mobile device.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

## BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.

FIG. 1 is a schematic diagram of a system block diagram for a first embodiment of a document retrieval system.
FIG. 2 is a flow diagram of an exemplary method embodiment for using a document retrieval system.
FIG. 3 is a data structure diagram of a data structure for an exemplary embodiment of a 2D drawing lookup table for a document retrieval system.
FIG. 4 is a flowchart of an exemplary method for adding geographical reference data to a document.
FIG. 5 is a schematic diagram illustrating an example of a system for executing functionality of the present invention.
FIG. 6 is a chart comparing the maximum geographical area covered by a given paper size format at a given scale with the current horizontal error of the measurement.

## DETAILED DESCRIPTION

The following definitions are useful for interpreting terms applied to features of the embodiments disclosed herein, and are meant only to define elements within the disclosure.

As used within this disclosure, an "asset" may refer to a geo-locatable resource with economic value that an individual, corporation or country owns or controls. For example, a land area, a parcel, a park, a building, a structure part of an infrastructure, and/or a plant (for example chemical, nuclear, oil & gas), among others.

As used within this disclosure, a "site" refers to the geographical location of an asset.

As used within this disclosure, a "worker" is a person working on a site. The work may be planning, auditing, constructing, renovating, manufacturing, interior design, or any other type of company or contract work. Many work tasks involve the use of two dimensional (2D) drawings for each of their task components: plan, organize, execute, monitor, and control.

As used within this disclosure, a "mobile device" is a processor based apparatus easily transportable by the worker, such as a smartphone, a tablet computer, or a laptop computer. A mobile device is capable of:

- taking a photo, and/or video, and/or imagery such as LIDAR from its location,
- associating annotations, metadata, including geographic location, and/or voice recordings and sounds,
- sharing the items above to selected other people through digital means, and
- when connected, receiving data, including 2D drawings and rasterized 2D drawings, from a repository system.

As used within this disclosure, a "document retrieval system" refers to a computer based device or group of communicating or connected devices configured to receive data as input and use the input data to locate and access a document stored in a repository system. The input data received by the document retrieval system may include one or more of a keyword, a specification, an image, a written description, a document identifier, a document index, a coordinate, and/or an optical code (e.g., a barcode or QR code), among others.

As used within this disclosure, a "repository system" or "document repository system" refers to a device or group of devices used to store, organize, and access 2D drawings and rasterized 2D drawings. The repository system may include one document storage device, or a plurality of document storage devices that may be co-located or geographically distributed, for example, accessible via a communications network.

As used within this disclosure, a "reference device" is a (typically small) apparatus placed on the site at a reference point with known coordinates. The reference device communicates its position relative to the mobile device so that when a photo, video or imagery is captured by the mobile device, the position of the photo, video or imagery may be offset by the relative position to the reference device to compute the geographic coordinates of the mobile device. The reference device may be based on one or more of several technologies such as radiofrequency, ultrasound, and infrared. In most applications, the preferred technology is radiofrequency. Within the radio frequency domain, there are many types of communications possible between a reference device with a mobile device, for example, but not limited to Ultra-Wideband (UWB), Chirp Spread Spectrum (CSS), LTE transmission, Bluetooth, including Low Power Emission (BLE), Wi-Fi, Cellular, Time-Difference of Arrival (TDoA), and Two-Way Ranging (TWR).

As used within this disclosure, except when specified as a "2D rasterized drawing," a "2D drawing" uses a vector graphics format that stores CAD entities and their properties, such as dimensions, layers, and annotations, using geometric primitives such as point, lines, curves. The format is scalable and editable. Examples of 2D drawing formats include DXF, DWG, DWF, SVG and Adobe Illustrator, and may sometimes be referred to as "vector" drawings.

As used within this disclosure, a "2D rasterized drawing" format uses rasterized images which are resolution-dependent, showing pixelation with high resolutions. The abilities of 2D rasterized drawings are limited to some edits such as cropping and contrast setting, but they can be annotated. For an identical view from the user, a 2D rasterized drawing file size is a more compact format than the vector graphic file size from which it was derived.

The detailed description refers to several systems used for measuring a location, including:

◦ Survey grade GPS/GNSS

Survey-grade GPS/GNSS receivers that utilize differential correction techniques, such as Real-Time Kinematic (RTK) or Post-Processing Kinematic (PPK), can achieve much higher accuracy than consumer-grade receivers. These techniques involve using a base station with a known position or post-processing data to refine the measurements and improve accuracy.

Typically, RTK measurements can achieve precisions in the range of 1-2 centimeters horizontally and 2-3 centimeters vertically in favorable conditions. PPK measurements, which involve collecting data in the field and processing it later with a base station or known reference points, can offer even higher precision, potentially reaching sub-centimeter accuracy.

◦ Consumer grade GPS
In general, consumer mobile devices typically have GPS receivers with much lower accuracy when compared to dedicated survey-grade GPS/GNSS receivers. The accuracy of GPS measurements from consumer devices can range from a few meters to tens of meters.

Smartphones may also utilize alternate location technologies such as Wi-Fi positioning and cellular network data to supplement GPS information when GPS signals are weak or unavailable.

◦ Differential GPS (DGPS) and RTK Services
Differential GPS (DGPS) and RTK Services improve the accuracy of GPS. These services can transmit correction data from known fixed ground-based reference stations locations and distances to one or more satellites of a constellation of satellites. The spacing of reference stations and the number of satellites used depends on the precision required and the redundancy of the coverage. Such systems are available for maritime navigation, surveying, and farming. Currently, Starlink has currently 6,100 satellites.

◦ Wi-Fi Positioning

Wi-Fi positioning, also known as Wi-Fi-based localization or Wi-Fi fingerprinting, takes advantage of the Wi-Fi networks in the surrounding area. When Wi-Fi is enabled on a smartphone, it continuously scans for nearby Wi-Fi access points. The smartphone compares the identifiers (MAC addresses) of these Wi-Fi networks with a database that associates known Wi-Fi access points with their geographic locations.

By matching the detected Wi-Fi access points to their known locations, the smartphone can estimate its position based on the proximity of those access points. This method is particularly useful indoors or in urban areas where GPS signals may be obstructed or weakened. However, this method does not have a great accuracy ranging from a few meters to tens of meters or more.

◦ Cellular Network Data
Smartphones can also utilize cellular network data for location determination. When a smartphone is connected to a cellular network, it constantly communicates with nearby cell towers. Each cell tower covers a specific geographic area, and the smartphone can estimate its position based on the signal strength and timing of the signals received from different towers. This method, known as cell tower triangulation or network-based positioning, relies on the knowledge of cell tower locations and signal propagation characteristics. The smartphone compares the signal strengths and timing from multiple cell towers to estimate its approximate location. Similar to Wi-Fi positioning, cellular network data is often used when GPS signals are weak or unavailable, but it provides less accurate positioning compared to GPS.

Reference will now be made in detail to embodiments of the present invention, examples of which are illustrated in the accompanying drawings. Wherever possible, the same reference numbers are used in the drawings and the description to refer to the same or like parts.

As mentioned in the background section, different domains depend upon documents for different reasons. For example, in a typical Architecture, Engineering, Construction (AEC) project, less than 15% of team members look at the project as a whole. Workers include construction project managers, construction designers and construction model coordinators, who manage the project, implement business processes to be followed by team members, evolve them during the project, monitor the project overall progression and the related costs and budgets. Their tasks cover for example:

- planning and construction of a building, or structure, or part of an infrastructure,
- renovation of a building, or structure, or part of an infrastructure,
- audit of a building, or structure, or part of an infrastructure,
- maintenance of a building, or structure, or part of an infrastructure, and
- demolition of a building, or structure, or part of an infrastructure.

Typically, 85% of the team members are workers performing tasks on site.

For the domain of cities, territories and public services, territorial engineering is generally located in offices. Workers on site need to communicate with their offices. Some of these workers may be working on tasks of a contract that has been outsourced to their own organization. Their tasks, for example, may include:

- planning and construction of a building, or structure part of an infrastructure,
- park and gardens management,
- renovation of a building, or structure part of an infrastructure,
- audit, commissioning, or health status of a building, or structure part of an infrastructure,
- energetic performance renovation of building, or structure part of an infrastructure,
- maintenance of a building, or structure part of an infrastructure, and
- dismantlement of a building, or structure part of an infrastructure.

For the large assets domain, workers at the site typically need to communicate with their offices. Their tasks, for example, may include:

- detailed planning and construction of the asset,

  ○ commissioning of the asset,

- maintenance of the asset,

  ○ detection of issues through routine duties or operation incidents,
  ○ identification of equipment and components,
  ○ access to relevant 2D drawings,

    • skillset level for the maintenance operation, and
    • safety instructions,

- decommissioning procedures,
- removal and access to installation manuals, and
- re-commissioning procedures.

For the manufacturing domain, workers on site may need to communicate with their offices. The manufacturing business processes may include, for example:

- discrete manufacturing,
- batch manufacturing, and
- continuous manufacturing.

Exemplary embodiments of the present invention set up a retrieval system for 2D drawings and 2D rasterized drawings, facilitate its uses, and make the retrieval system traceable and auditable. The retrieval system substantially increases worker productivity and worker agility in correctly completing, providing efficiencies for associated business processes.

The embodiments prepare the repository to include reference points with geographic coordinates on each 2D drawing of an asset, for example reusing the reference points in submitted 2D drawings at the permitting stage such as plan of site and layout of site. In addition, detailed satellite views are becoming more accurate. For example, IGN (Institut national de l'information géographique et forestière) has released detailed maps by using LIDAR in order to capture horizontal and vertical data. This data corresponds to 10 points per square meter for metropolitan France.

Typically, each 2D drawing has its own scale. The scales generally vary over a wide range, for example from typically 1/1000 for site plans, 1/500 for layout plans, 1/100 and 1/50 for more detailed plans. The 2D drawing for installation details are not generally geo-located because the same installation may refer to several installations in adjoining drawing(s). The embodiments address this in the following manner.

In order to facilitate the production of reference points for each of the 2D drawings, it is desirable to start with the largest scale drawings and continue with 2D drawing having progressively smaller scales.

The embodiments deduces geographic coordinates (North, South, East, West) from geodetic points in conjunction with the scale. Enclosing the 2D drawing with a quadrilateral space oriented along the coordinates (N, S, E, W) enables the embodiments to find the geographic coordinates of the four corners of each 2D drawing containing a plan. For multi-layer 2D drawings, such as general 2D drawings, the embodiments separate the layers by trade in their original formats.

For 2D drawings not containing plans, but instead containing data referring to a 2D drawing such as notes, schedules, legends, and details, they are grouped with the referent 2D drawing as a packet. A rasterized format of each solo or packet of 2D drawings may also be generated from the 2D drawing. The identifier of each 2D drawing and 2D rasterized drawing and its trade are entered, for example, on a row followed by the geographic coordinates of the 4 corners of that 2D drawing and 2D rasterized drawing. The rows for each of the 2D drawing are used to create a lookup table. Supplied geographic coordinates may later be associated with the relevant 2D drawings and 2D rasterized drawings using that lookup table.

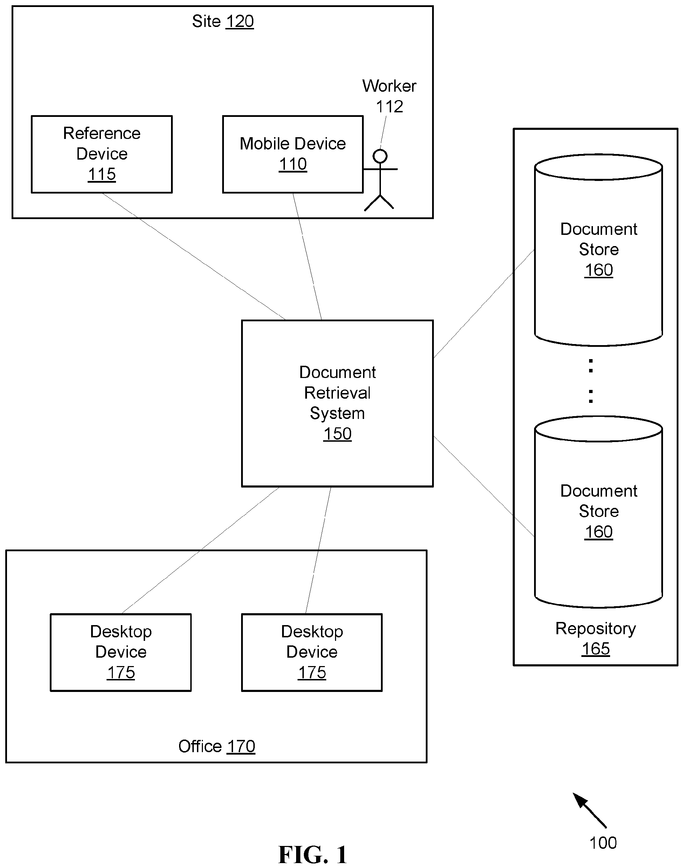

For illustrative purposes shown by FIG. 1, the embodiments are disclosed in the context of an exemplary scenario 100 of a worker 112 located at a work site 120 using a document retrieval system 150 to access relevant 2D drawings stored in a repository 165 having one or more document stores 160. Here, the worker 112 seeks to access a 2D drawing or 2D rasterized drawing relevant to the trade work being performed, for example, architecture, electrical, and mechanical, fire safety, among others. The worker 112 uses a mobile device 110, for example a computer based smart phone, tablet computer, or laptop computer, to take a photo at the site location, for example, a selfie, and sends the photo to the document retrieval system 150, for example, via a network, for example, the internet or a cellular communications network. If the mobile device 110 has unimpeded global positioning system (GPS) signal reception, the mobile device 110 captures metadata of the geographic coordinates of the mobile device 110 and provides the geographic coordinates to the document retrieval system 150.

If the GPS signal reception is impeded, the geographic coordinates may be provided by a reference device 115 located at the site 120. The reference device 115 may be, for example, an Indoor Positioning System (IPS) device using radio frequency, such as an Apple AirTag, or device manufactured by another supplier such as Estimote, Kontakt.io, or Gimbal, among others. The reference device 115 is placed at a selected reference point with known geographic coordinates, including elevation. The selected position and elevation of the reference device are added to the relevant 2D drawings, in this example, a photograph, and transmitted to the document retrieval system 150.

The document retrieval system 150 receives the metadata from the mobile device 110 of the worker 112 containing, the identifier of the reference device 115 used, and the offset from the reference device 115. The offset may be presented in different ways, such as expressed deltas in coordinates, or as the distance between the reference device 115 and the mobile device 110 and its direction. The document retrieval system 150 computes the location of the mobile device 110 in UTM coordinates and to identify the relevant 2D drawings, for example, using a repository lookup table.

The document retrieval system 150 identifies the location provided by the UTM coordinates, and compares the location and trade using the lookup table of the repository 165. The document retrieval system 150 checks if the worker 112 has sufficient permission to access documents in the repository 165, for example, whether the worker 112 has permission for access to the nature of the trade of the 2D drawings, and/or whether the worker 112 has permission for access to 2D drawing(s) or 2D rasterized drawings only. If the worker 112 has the appropriate permissions, the document retrieval system 150 retrieves the relevant drawings and promptly sends the documents to the mobile device 110 of the worker 112.

The worker 112 may use the document retrieval system 150 to report an issue, for example, if during the course of the work, the worker 112 encounters one or more issues. The worker 112 captures and communicates each issue. The worker 112 may propose a solution to address the issue, and preferentially resolves the issue locally on the site. For example, the worker 112 takes a photo showing the issue, annotates the photo on the mobile device 110, and sends a package including metadata and the identification of the trade of the worker 112 to the document retrieval system 150.

The document retrieval system 150 uses the metadata received from the worker 112 with the lookup table of the repository 170 to determine which 2D drawings or 2D rasterized drawings are relevant to the issue. Following the system control of permission access by the worker 112, the document retrieval system 150 sends the relevant 2D rasterized or drawing(s) back to the mobile device 110. The worker 112 may then annotate the 2D rasterized drawings by showing the detailed location of the issue, if needed, adding video, imagery and/or voice recording to send back to the document retrieval system 150.

In cases where the GPS signals cannot be received by mobile device, the error in metadata may result in difficulty for the document retrieval system 150 to locate the correct 2D drawings. As noted above, in this case, a pre-positioned reference device 115 with its unique identifier for the site and within coverage may provide its known reference location. The mobile location is provided by the offset by the relative position of the mobile device 110 to the reference device 115. More recently, Apple UltraWide Band improves the accuracy by a factor of three (from 9 meters to 27 meters) and is available on watches.

As another example, the exemplary embodiments may be used for triaging the issues of workers and launching business processes. Issues reported from the site and received by the document retrieval system 150 may result from any number of causes, such as incorrect design, improper or defective material or product, a used product needing replacement or part replacement, dilapidated material, improper installation, and removal of prior work from another trade required before work can be pursued, among others.

The embodiments may provide a link from a received cite problem report to the relevant business process. For example, upon approval of a modification as a design change, the document retrieval system 150 may launch a business process to edit one or more 2D drawings. Upon approval regarding a material or product issue, the document retrieval system 150 may launch a business process for a supplier and/or reception issue. Upon approval as an installation problem, or out of sequence work, the document retrieval system 150 may launch a business process for a rework with potentially a resupply.

The embodiments may the location accuracy of documents in the document retrieval system 150 for a given site. In general, the accuracy of the positioning of site documents is defined by the initially assigned geodetic reference points.

A site plan designer may access a received package with the annotated 2D rasterized drawings. The package contains the location provided by the received metadata, either provided directly by the mobile device 110, or determined via offset from the reference device 115 to the mobile device 110, and the identifier of the reference device 115. The document retrieval system 150 annotates the location on the 2D rasterized drawing.

The document retrieval system 150 analyzes deviations between the differing metadata locations across received document packages to understand the causes of the deviation. Generally, resolution and fidelity of the mobile device 110 and or reference device 115 plays a role. The resolution of the mobile device 110 or reference device 115 is considered to be high if the difference between two graduations of the geolocation of the device is small. A mobile device 110 or reference device 115 may be considered to have good fidelity if it produces the same result for the same measurement under similar conditions at different times. In contrast, the mobile device 110 or reference device 115 may be considered "sensitive" if small variations of the signal received create large differences in measurements.

Given the cumulative results obtained from the site from each mobile device or reference device, the system 100 can selectively adjust either the geolocation of the 2D drawing(s) in the repository, or the metadata from a given device. Under the embodiments, the geolocation of 2D drawings in the repository 165 may improve over time.

Under the embodiments, all communications from mobile devices 110 to the 2D drawing repository 165 may be preserved to ensure traceability and auditability.

Under the exemplary embodiments, the document retrieval system 150 is a retrieval system for 2D drawings. The following detailed description explains its uses, how to correct errors, and how the implementation makes the system traceable and auditable.

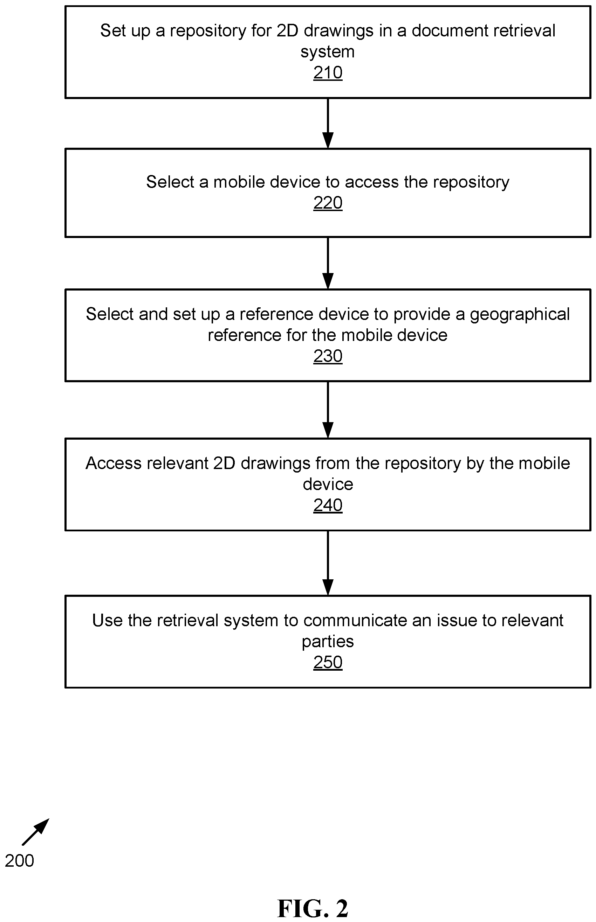

FIG. 2 is a flow diagram 200 of an exemplary method embodiment for using a document retrieval system. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

A repository is set up for 2D drawings in a document retrieval system, as shown by block 210. For example, documents of the repository may be updated/revised to reference a predetermined document standard, including geolocation coordinates and units of measure, among others. A mobile device is selected to access the repository, as shown by block 220. For example, the mobile device may be the mobile device of a worker used from a site geographically removed from the repository to submit one or more document to the repository and/or access one or more document from the repository. A reference device is selected and set up to provide a geographical reference for the mobile device, as shown by block 230. A 2D drawing from the repository is accessed by the mobile device, as shown by block 240. Via the mobile device, the worker uses the document retrieval system to communicate an issue or the current status of completion, as shown by block 250. For example, an issue may be a discrepancy between the accessed document and a corresponding feature represented by the accessed document at the site, such as a missing feature or a difference in location, size, and or orientation with respect to the accessed document. The worker may indicate the discrepancy via annotations on the submitted and/or accessed document.

The document retrieval system 150 for 2D drawings and 2D rasterized drawings may operate with a document check-in /check-out system, so it can be collaborative and provide the current version of the 2D drawings in the repository 165.

The document retrieval system 150 may be used with an existing document repository 165 after the existing document repository 165 is prepared to operate with the document retrieval system 150.

The document retrieval system 150 may adopt the units of measurement of a legacy repository. For example, the 2D drawings may have been drafted using the metric or imperial system and the system initially used is maintained by the document retrieval system 150.

The document retrieval system 150 may operate on specific aspects of a design and trade. Table 1 illustrates an exemplary template pertaining to identifying design and trade metadata for a document:

| Field | Content | Notes |
|---|---|---|
| Trade | 1 or 2 letter code | For example: (A, FA, FP, K, H,P, LS, ..) |
| Sheet Number | 001 to 999 | |
| Sheet Name | <name> | Trade +Content + Level (if Plan) |
| Stage of CAD Drafting | 2 letter code | SD: Schematic Drawing<br>DD: Design Development |
| | | CD: Construction Documentation |
| Table 1: design and trade document fields | | |

Regarding the trade field, various 2D drawings communicate specific aspects of a design by nature of trade to the qualified user. The nature of the aspect or trade may be identified, for example, by a lettering symbol of one or 2 letters. Examples of specific aspects on a design commonly found in 2D drawings include:

∘ Site Plan - SP: A site plan is an architectural drawing that provides an overview of a property or site. It typically shows the location and orientation of buildings, roads, parking areas, landscaping features, and other elements on the site.
∘ Existing Conditions - EX: Existing conditions refer to the current state or characteristics of a site or building before any proposed changes or construction occur. Existing conditions drawings often depict the layout of existing structures, topography, utilities, vegetation, and other relevant features.
∘ Layout - L: Layout refers to the arrangement or positioning of various assets within a design. It can include many types of entities.
∘ Demolition - D: Demolition refers to an illustration of the areas, components of an asset, or whole asset, proposed for removal or demolition.
∘ SubSlab - SS: Subslab typically refers to the area beneath the concrete slab of an asset. It includes the materials and systems that are installed below the slab, such as insulation, vapor barriers, and utility conduits.
∘ Architectural - A: Architectural drawings show the layout and design of assets, including walls, floors, and other architectural elements.
∘ Life Safety - LS: Life safety refers to the measures and features incorporated into a design to protect occupants from harm during emergencies or dangerous situations. It includes elements such as fire exits, emergency lighting and other safety features.
∘ Structural - S: Structural drawings depict the framework and load-bearing components of a structure, such as columns, beams, foundations, and structural connections.

-    Structural Steel: Structural steel drawings specifically focus on the fabrication and erection of steel structures, including steel beams, columns, connections, and other steel components.

∘ Electrical - E: Electrical drawings illustrate the electrical systems within a building, including power distribution, lighting fixtures, outlets, switches, and wiring diagrams.
∘ Mechanical - H: Mechanical drawings represent mechanical systems and equipment, such as HVAC (heating, ventilation, and air conditioning), plumbing, ductwork, equipment layouts, and piping systems.
∘ Plumbing - P: Plumbing drawings show the water supply, drainage, and waste disposal systems within a building, including pipes, fixtures, valves, and other plumbing components.
∘ Fire Safety - FS: Fire safety drawings detail the fire protection and life safety systems, such as fire alarms, sprinklers, fire exits, emergency lighting, and evacuation plans.

- Fire Protection - FP:
- Fire Alarm - FA:

∘ Kitchen/Food Service - K:

∘ Landscape - LA: Landscape drawings depict the design and arrangement of outdoor spaces, including elements such as trees, plants, walkways, and hardscape features like walls and fences.
∘ Civil - C or CE: Civil drawings pertain to site development and infrastructure, including site plans, grading, roadways, parking lots, utilities, and drainage systems.
∘ Telecommunications - T: Telecommunications drawings represent the layout and configuration of communication systems, including data networks, telephone lines, fiber optic cables, and equipment placement.

The specific trades required for an asset depend on the nature of the design and the requirements of the asset represented. Letters representing the trade may vary from country to country and from one company usage to another.

In addition to 2D drawings containing plans, the document retrieval system 150 can manage several other types of 2D drawings used in various disciplines that do not typically include plans. Here are some common examples:

∘ Legends: Legends provide explanations or key information about symbols, abbreviations, or other elements used in the referent 2D drawing(s). They help users understand the meaning of various graphical representations or annotations.
∘ Notes: Notes are textual annotations that provide additional information or instructions related to the referent 2D drawing. They can clarify specific details, specify materials, provide dimensions, or communicate important information relevant to the other 2D drawing.
∘ Schedules: Schedules are tabular representations that organize and list information related to various components or elements in the referent 2D drawing. For example, in architectural drawings, schedules may include lists of doors, windows, fixtures, or finishes with their respective quantities, sizes, or specifications.
∘ Details: Details are enlarged views of specific sections or components of a referent 2D drawing. They provide a more detailed representation of a particular area, highlighting specific features, connections, or construction methods. Details are often used to communicate precise information about critical aspects of a design.
∘ Elevations: Elevations are 2D representations of the vertical faces or facades of a building or structure. They show the exterior appearance of the building from different viewpoints, highlighting features such as windows, doors, and architectural details.
∘ Sections: Sections are 2D drawings that slice through a building or object to reveal its internal structure or components. They provide a view that helps a user visualize the relationships between different parts and understand how they fit together.
∘ Diagrams: Diagrams are simplified graphical representations used to illustrate concepts, relationships, or processes. They are commonly used in fields like engineering, electronics, and systems design to explain complex systems or workflows of referent 2D drawing(s).
∘ Isometric Drawings: Isometric drawings are 2D representations of objects or structures that are drawn in a three-dimensional perspective. They provide a realistic representation of an object's spatial layout and are often used in engineering and technical illustrations.
∘ Renderings: Renderings are highly detailed and realistic 2D drawings or images that depict how a design or space will look when completed. They often incorporate lighting, shading, and texture to provide a visual representation of the final product.

The types of 2D drawings listed above may be used in conjunction with one or more 2D drawings within a specific trade, with some exceptions, for example, for initial page(s) and summary. These types complement the information needed by the user to correctly apprehend the task to be performed. The 2D drawings are organized, by trade, either as a single 2D drawing or as a packet of several 2D drawings.

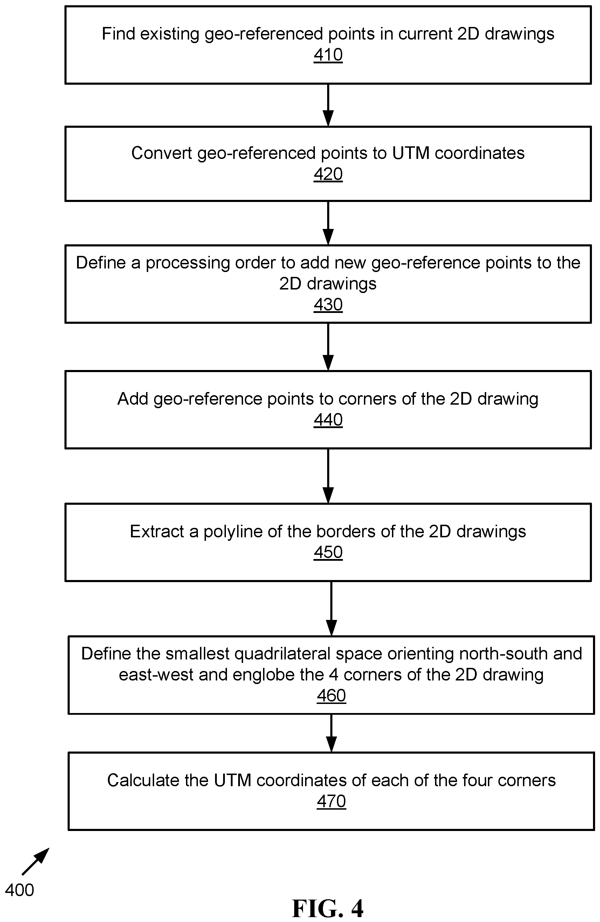

FIG. 4 is a flowchart of an exemplary method for adding geographical reference data to a document. Existing geo-referenced points are located in current 2D drawings, as shown by block 410. Geo-referenced points are converted to UTM coordinates, as shown by block 420.

A processing order is defined to add new geo-reference points to the 2D drawings, as shown by block 430. For example, for each drawing new geo-reference points are added to the 2D drawings, layout plans are used for horizontal coordinates, columns in drawings are used as reference points inside an asset, and sections and elevations are used to determine defined levels in the asset, starting with the lowest level of elevation in the asset.

Geo-reference points are added to corners of the 2D drawing, as shown by block 440, and a true north coordinate system is defined for the 2D drawing. A polyline of the borders of the 2D drawings is extracted, as shown by block 450. The smallest quadrilateral space orienting north-south and east-west is defined, and englobing the 4 corners of the 2D drawing as shown by block 460. In DWG drawings, for example, the lower left corner of the drawing is the origin (0,0,0) and the sides of the drawings constitute the selected polyline. The UTM coordinates of each of the 4 corners of each 2D drawing, as shown by block 470.

For documents that do not already have it, the document retrieval system 150 may add latitude and longitude to some reference points. Reference points with geographic coordinates (geodetic points) are typically already available on some of the 2D drawings. Different geographic systems may be used, the most commonly used is Universal Transversal Mercator (UTM) which is expressed:

- within a reference median to a 6 degrees section of the earth,
- latitude and longitude (in meters).
- Angles are expressed in degrees, minutes, seconds, although some expressions may require radians.
- Elevation is measured in meters in reference to the sea level.

In order to submit a permit application for an asset, a document should include;

- some geodetic points on defined points of the parcel or unified parcel,
- segment lengths and orientation of each segment (DMS) along the perimeter of the border of the parcel or unified parcel, and
- arc lengths with center and radius when the segment is not linear.
- Elevation data is also available through 2D drawings representing elevations and sections submitted as required part of the permit application for the asset.

The document retrieval system 150 can manage several measurement methods ("units of measure".) Several different unit systems are used regionally. The document retrieval system 150 references the most internationally used by surveyors, namely Universal Transverse Mercator (UTM) and the DMS (degrees, minutes, seconds) system.

The UTM divides the Earth in to 60 zones, each spanning 6 degrees of longitude. Each zone has a unique central meridian and its own set of coordinates. Locations use a combination of zone numbers, eastings (E) and northings (N). For example:

- N 123456.7890 refers to the northing and represents the distance in meters north of the equator, i.e., 123456.7890 meters with an apparent resolution of 4 decimals
- E 8765.4321 refers to the easting and represent the distance east of the central meridian of the UTM zone, i.e., 8765.4321 meters, with an apparent resolution of 4 decimals.

The DMS format (Degrees, Minutes, Seconds) is also used for mapping. The document retrieval system 150 converts DMS format latitude from degrees to meters, where the latitude value is multiplied by the approximate conversion factor of 111,111 meters per degree.

The document retrieval system 150 converts DMS format longitude from degrees to kilometers according to the formula:

$$1 \text{ degrees of longitude} = (pi/180) * radius * \cos(\text{latitude}) \text{ (Eq. 1)}$$

where radius is the radius of the Earth (Appx 6,371 kilometers). DMS is not nearly as accurate as the UTM system, and is used mainly for the orientation of the segments along the border of the unified parcel.

A permit application requires a professional surveyor in order to determine:

- several reference points (geodetic points) approximately some the corners of the unified parcel are measured with a high resolution, with 4 decimals, (tenth of millimeter),
- the borders of the parcel or unified parcel on which work for the asset will be done, and
- from there, each segment of the border of the unified parcel will be represented:

- If straight, by its length and the angle of the segment line in degrees, minutes, and seconds from the cardinal axes (N, S, E, W)
- If non linear, by a circular arc with its radius, position of center and arc length.

The outline of the foundations and/or a top view layout of the finished asset is tagged with reference points (geodetic points) at some of the corners of the asset. The typical resolution is 2 decimals in meters (centimeters). The layout of asset must show that it respects the local code about minimal distances from the borders, overhang distances from borders to roofs, equipment, etc.

A site plan may be submitted by reusing earlier surveys of the parcels(s). There may be some variation by country, state, and territoriality such as county on permitting of the asset, but the principle generally remains the same. Site plan, layout plan(s), sections and elevations need to be part of the 2D drawings required to submit a valid permit application of the asset.

The document retrieval system 150 adds Elevation Coordinates to existing drawings in the repository 165, and/or to documents newly received from the worker 112. It should be noted that elevation of the reference points is not necessarily indicated on the site plan nor on the layout plans. Instead, sections and elevations are usually provided as measurements in reference to the ground level. Each significant horizontal plane is measured such as foundations, underground floors, ground floor, first level, and each one of the levels afterwards up to the top of the asset. These measurements use the same system (metric or imperial) as the other 2D drawings. For example, in the imperial system, the lowest level indicated on the 2D drawing is referenced to the sea level in feet and 0 inches. The next upper levels are referenced to the reference to sea level in feet and inches. When the ground is sloping, elevations show the portion of the asset visible from the viewpoint, but typically the reference is to the lowest horizontal plane of the asset.

According to the first embodiment, the document retrieval system 150 determines a process order to add geo-referenced points to the 2D drawings. Generally, each 2D drawing has its own scale. Scales vary in a wide range from approximately 1/1000 for site plans, 1/500 for layout plans, and 1/100 and 1/50 for more detailed plans. Typically, workers provided 2D drawings for installation details are not geo-located because they are used in many different locations.

2D drawings use vector graphics. It is possible to zoom in on a section of a 2D drawing and keep a very high accuracy level. The zoom function can typically enlarge the 2D drawing up to 40,960 times without being limited by pixel size. This enables the placement of new geo-referenced points with a high precision on a feature of the 2D drawing. In contrast, 2D rasterized drawings accuracy is limited to the pixel size used for the raster. For 2D rasterized drawings, points on the lower scale drawings generally have better accuracy than for higher scale drawings. Preferably, in order to facilitate the production of reference points for each of the 2D drawings, drawings with the largest scale are converted first, continuing with drawings having smaller scale.

The system uses the larger scale reference points such as the ones on the layout plan that have two decimals resolution to select and reference additional points on the same layout plan, in particular on the perimeter of the asset where typically piles for the foundations are located. Depending on the asset layout, piles are also planned to support specific loads within internal subslabs of the asset. These additional reference points are generally sufficient to move by steps from a layout 2D drawing to 2D drawings with lower scales and determine the UGM coordinates for each of them.

The document retrieval system 150 uses two different approaches for referencing a 2D drawing for determining the coordinates (true North, South, West, East) for each of the 2D drawings of the asset. The first approach uses one geodetic point and an angle, namely a geodetic point in the UGM representation with latitude, longitude. The first approach uses the angle in degrees, minutes, seconds indicated by a line segment of the border represented on the 2D drawing, preferably selected from a large segment. The first approach references elevation separately using sections and elevations of the asset.

The second approach uses two geodetic points, having coordinates in latitude and longitude, here $(x_1,y_1)$ and $(x_2,y_2)$. The reference level chosen for respective elevations $z_1$ and $z_2$ are the same. If necessary, the second approach may use isoclines when $z_1$ and $z_2$ values differ and are not constant.

The North-South direction and the East-West direction are determined by providing a third point that is the solution of:

$$(x\text{-}x_1)^2 + (y\text{-}y_1)^2 = (x_2\text{-}x_1)^2 \text{ (Eq. 2)}$$

$$(x\text{-}x_2)^2 + (y\text{-}y_2)^2 = (y_2\text{-}y^1)^2 \text{ (Eq. 3)}$$

Geometrically, the point is the intersection of two circles, one centered in $(x_1,y_1)$ and the second centered in $(x_2,y_2)$, where $(x_1,y_1)$ and $(x,y)$ define the horizontal parallel to the equator, and $(x,y)$ and $(x_2,y_2)$ define the vertical parallel to the North-South direction. Elevation is referenced separately using sections and elevations of the asset.

The document retrieval system 150 finds the geo-locations of the 4 corners of the 2D drawing by defining the smallest quadrilateral space properly oriented North-South and East-West which englobes the whole space of the 2D drawing, and selecting the intersection points between the corners of the 2D drawing and the quadrilateral space. In the new referential in meters defined by the previous reference points, new reference points are added on the corners of the 2D drawings and new reference points are added along the asset, and if necessary, within the asset. An ordered list of the corners of the 2D Drawing is created, for example lower left, upper left, upper right, lower right.

The document retrieval system 150 separates the layers of multi-layer drawings including general 2D drawings by creating one 2D drawing per layer. Each of these drawings per layer maintains the scale, and the reference points, and maintains the identification of the trade involved for each layer (for example, HVAC, Plumbing, Mechanical, Security System, Communication, etc.) which is often used as a standard per country.

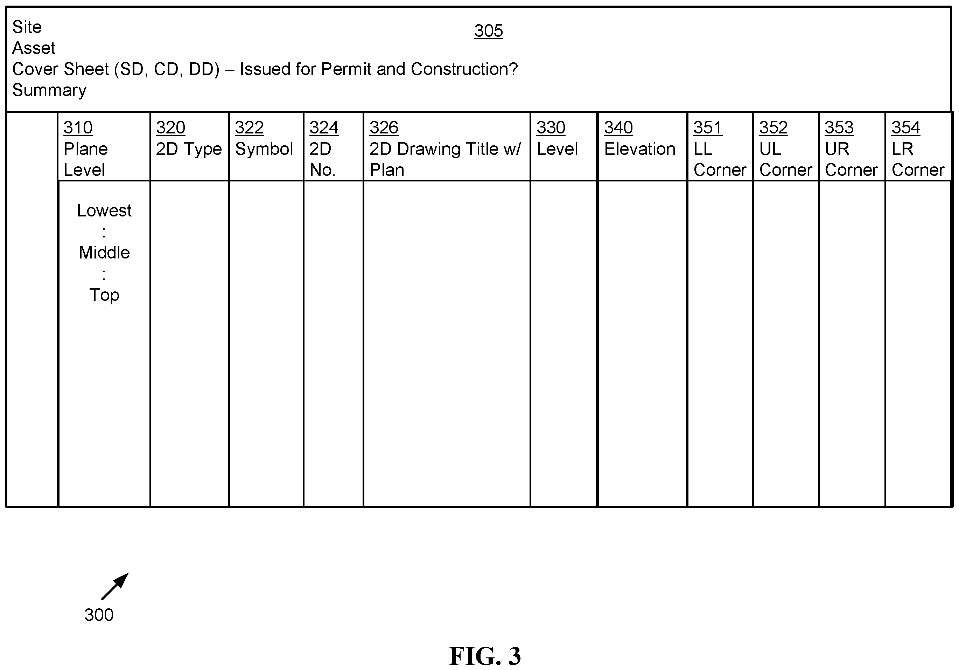

The document retrieval system 150 creates a lookup table for all the 2D drawings of the site. An exemplary data structure for a lookup table 300 is shown by FIG. 3. The top attributes of the cover sheet 305 may include the site, asset, and a summary list of 2D drawings.

The lookup table 300 of the asset may have, for example, one row per 2D drawing or packet of 2D drawings. In this example, the line indicates: a document title as indicated in the title block, an identifier of each 2D drawing 324, a plane level (starting from the lowest level to the highest one) 310, a Level index 330, an elevation 340, a nature of trade of the 2D drawing, (for example, Life Safety) 320, a lettering symbol (Ex: LS) 322, its number (Ex: 02 for Life Safety LS 02) 324, and the geographic coordinates (latitude, longitude) of the 4 corners of the 2D drawing (lower left 351, upper left 352, upper right 353, and lower right 354).

The document retrieval system 150 determines whether supplied geographic coordinates are within or outside any 2D drawing coordinates of an asset contained in the repository 165. For example, for a horizontal line between the upper left corner $(x_1, y_1)$ and the upper right corner $(x_2, y_2)$ of the 2D expressed in UGM coordinates, the document retrieval system 150 calculates the slope (m) of the line passing through points $(x_1, y_1)$ and $(x_2, y_2)$ using the equation:

$$m = (y_2 - y_1) / (x_2 - x_1) \text{ (Eq. 4)}$$

to determine if a supplied point by the mobile device $(x_n, y_n)$ is on one or the other half-plane defined by the line passing through points $(x_1, y_1)$ and $(x_2, y_2)$. The document retrieval system 150 calculates the equation of the line (in point-slope form) using the slope (m) and one of the given points:

$$(x_1, y_1): y - y_1 = m(x - x_1) \text{ (Eq. 5)}$$

The document retrieval system 150 substitutes the x-coordinate $(x_n)$ of the third point into the equation obtained to find the corresponding y-coordinate on the line:

$$y'_n = m(x_n - x_1) + y_1 \text{ (Eq. 6)}$$

If $y'_n > y_n$, the point $(x_n, y_n)$ is above the line and $(x_n, y_n)$ is not located within the 2D drawing. If $y'_n < y_n$, the point $(x_n, y_n)$ is below the line, and the next border $(x_3, y_3)$ is evaluated in turn. The successive evaluations along the 4 borders delineated by the corners of the 2D drawing will either fail during an evaluation interrupting the process, or be successful and show that the supplied point $(x_n, y_n)$ is within the specific 2D drawing.

The document retrieval system 150 may be configured to create a rasterized version of each 2D drawing(s), solo or packet, with the same title, lettering symbol and number.

Preparing the mobile device to transmit proper metadata to the Retrieval System

A mobile device 110 may be prepared to transmit metadata formatted for handling by the document retrieval system 150. As described previously, there are different kinds of systems used for measuring a location, including survey grade GPS/GNSS, consumer grade GPS, Wi-Fi positioning, and cellular network data. Many smartphones employ approaches that combine GPS, Wi-Fi positioning, and cellular network data to provide more accurate and reliable location information. These positioning systems intelligently switch between different location technologies based on signal strength, availability, and accuracy. The accuracy of the location remains quite low.

For conditions where signals are not impeded, the mobile device 110 may be configured to verify that with each photo, video or imagery captured, the mobile device will create metadata of the coordinates (longitude, latitude, and elevation) of the device at the location where the mobile device captured the photo, video, or imagery, as well as possibly the orientation of the camera or imaging system. The mobile device may verify that the metadata is accessible and can be output through digital communication to the drawings repository.

The mobile device 110 may also provide elevation data to the document retrieval system 150. Here, the mobile device 110 captures the elevation in reference to the sea level using GPS. On an iPhone, for example, the resolution in meters is provided with 2 decimals (cm). Measurements outdoor may have a good fidelity, but may not be very accurate. With proper reception of the signals, elevation may be captured both outdoors and indoors. However, with poor reception of the signals, the elevation data may not appear on the mobile device 110.

In some instances, the mobile device 110 may be temporarily disconnected from the document retrieval system 150. The mobile device 110 may then send the photo and package upon reconnection to the document retrieval system 150. For conditions where signals are impeded, and the above-mentioned solutions provide poor results. In such locations, for example, in a basement, or a series of walls, or a tunnel, an alternative method may be used, for example using a reference device, as described below.

Preparing the reference device to transmit proper metadata to the Retrieval System

The reference device 115 may be prepared to transmit metadata formatted for handling by the document retrieval system 150. As described above, in general the reference device may be an Indoor Positioning System (IPS), typically using radio frequency. BLE, UWB and LTE are frequently used for indoor locations. There are also different methods to use the signal exchanged between the mobile device and the reference device such as Angle of arrival, Angle of Departure, Signal Strength, Time of Arrival. With multiple reference devices 115 or mobile devices 110 in use, additional methods such as triangulation may be used. Devices can also use some of these methods in combination.

The reference device 115 may be set up as follows. A reference point is selected using the 2D drawing, The reference device 115 is placed at that reference point and at a defined elevation, for example on the floor of an asset at the site. The mobile device tracks the (x,y) position of the reference device relative to the mobile. The photo, video or imagery location may be determined by using the offset of the mobile device 110 relative to the reference device 115. This location measurement may generally be considered accurate for short range and direct line of sight. Several reference devices may be used, each one with its own identifier, in proximity of one another in order to extend the coverage and provide triangulation measurements to improve accuracy. Metadata positioning is collected through mobile devices, and indirectly through reference devices. The metadata may be transmitted via digital means to the repository 165 along with the other metadata and pictures, videos, imagery, and annotations, using for example, Wi-Fi of the site. Simple tests may be conducted at the site with the specific mobile devices and reference devices to confirm sufficient accuracy.

Steps for accessing the metadata of the location of a reference differ according to the specific reference device. For example, using an AirTag and an iOS device, the Find My app may be used (pre-installed on iOS devices). The same Apple ID for the AirTag and the iOS device must be used. On AirTag's details page, look for the "location" section and tap to view the most recent location of the AirTag. (It should be noted that the location resolution continues to improve over time. For example, the UWB new chip, U2, brings the detection range from approximately 30 ft to 90 ft (9 m to 27 m). It is expected that location devices such as AirTags will continue to incorporate these improvements. The location is expressed using the World Geodetic System 1984 (WGS 84). The coordinates may be extracted automatically, for example using Python code using "pyicloud" library with install, as shown by Table 2.

```
import pyicloud

# Authenticate with iCloud using  your Apple ID and password
api = pyicloud.IcloudService('your.apple.id', 'your.password')

# Retrieve a list of devices associated with your Apple ID
devices = api.devices

# Loop through the devices to find AirTags
for device in devices:
        if device['modelDisplayName'] == 'AirTag':
            #access the AirTag's location data
            location = device.location()

            #retrieve the coordinates (latitude and longitude)
            latitude = location['latitude']
            longitude = location['longitude']

            # Use the coordinates as desired (e.g., transmit to
            # another system)
```

Table 2: example Python code

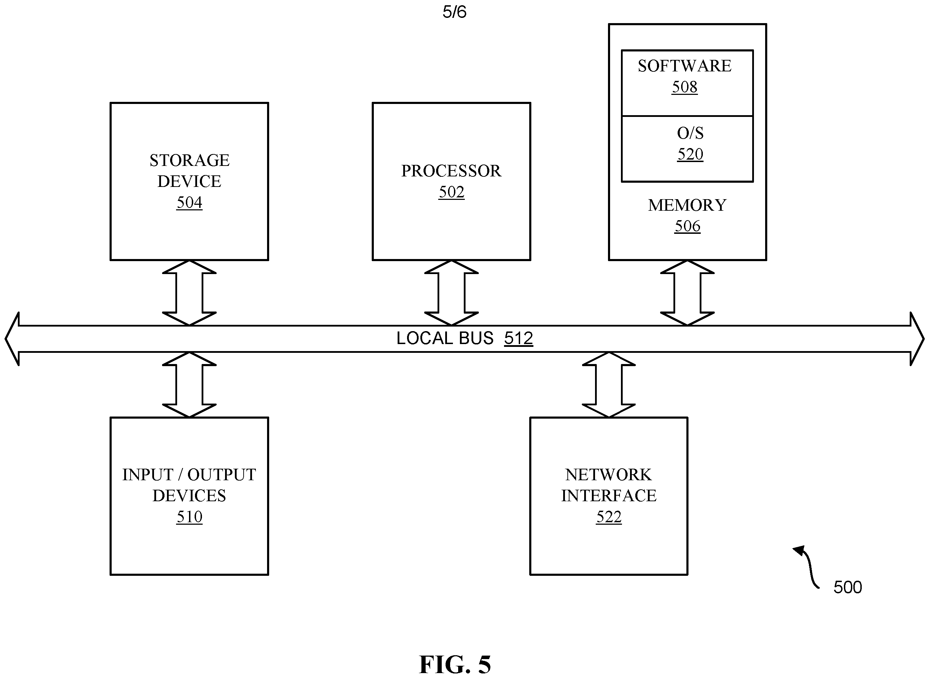

The present system for executing the functionality of the document retrieval system 150 described in detail above may be a computer, an example of which is shown in the schematic diagram of FIG. 5. The system may generally be implemented in the cloud and/or as a distributed system. The system 500 contains a processor 502, a storage device 504, a memory 506 having software 508 stored therein that defines the abovementioned functionality, input, and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a microprocessor, or generally any device for executing software instructions.

The memory 506 can include any one or combination of volatile memory elements (e.g., random access memory (RAM, such as DRAM, SRAM, SDRAM, *etc.*)) and nonvolatile memory elements (*e.g.,* ROM, hard drive, tape, CDROM, *etc.*). Moreover, the memory 506 may incorporate electronic, magnetic, optical, and/or other types of storage media. Note that the memory 506 can have a distributed architecture, where various components are situated remotely from one another, but can be accessed by the processor 502. Likewise, the processor 502 may be a single processor or a distributed system of multiple processors, for example, two or more servers.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, *etc.* Furthermore, the I/O devices 510 may also include output devices, for example but not limited to, a printer, display, *etc.* Finally, the I/O devices 510 may further include devices that communicate via both inputs and outputs,

15

for instance but not limited to, a modulator/demodulator (modem; for accessing another device, system, or network), a radio frequency (RF) or other transceiver, a telephonic interface, a bridge, a router, or other device. The system may also use a network interface 522 to access external resources, for example, a cloud based server or storage system.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 or the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The following are examples of using the document retrieval system 150. In a first example use-case, the worker 112 wants to access 2D drawings relevant to the trade of its current task, for example, electrical, HVAC, or mechanical, among others. The worker takes a photo of where he is, even a selfie, and sends it to the document retrieval system 150. If the metadata was directly provided by the mobile device 110, the metadata is sent to the document retrieval system 150. If the metadata was provided through the use of a reference device 115, the reference device identifier is also sent in the package.

Upon reception of the package, the document retrieval system 150 identifies an approximate location. The document retrieval system 150 verifies that the permissions of the worker 112 allows the worker 112 to access the relevant 2D drawings and/or 2D rasterized drawings for his trade. The document retrieval system 150 compares the elevation measurement received from the mobile in meters to the elevation of the 2D drawings converts to meters if necessary. The document retrieval system 150 converts the geographic coordinates supplied by the metadata of the mobile device 110 from DMS coordinates and elevation coordinates into UTM coordinates and elevation coordinates. The document retrieval system 150 compares the converted UTM metadata with the above-mentioned lookup table 300 to see if the location of the metadata provided by the mobile device is within the four corners of the row of the lookup table 300.

The document retrieval system 150 retrieves the relevant 2D drawing(s) and corresponding 2D rasterized drawing(s) when the following conditions are met:

- Correct asset requested
- Worker qualified for the trade requested
- Access by worker to 2D drawings allowed for his trade for this asset
- Access granted to 2D drawing in rasterized form only or also in native form

- Elevation metadata is within a level plane of the 2D drawings
- Location of metadata provided is within the corners of the 2D drawing

If the criteria is met, the document retrieval system 150 sends the retrieved documents back to the mobile device 110.

In a second example use-case, the worker 112 encounters on-site issues, having different causes. The worker 112 seeks to capture and communicate each issue, and may propose solutions to fix them, preferably solving each on-site if possible. The worker 112 takes a photo of each issue using mobile device 110 and annotates the photo or imagery using edits such as arrows, bubbles, magnifiers and text and voice recording, if needed. For example, on an Apple mobile device, the worker 112 takes a photo of the issue, moves the photo from a photo app to the mobile device desktop, opens the photo with the iOS app "Preview," clicks on "Tools" in the toolbar, selects and uses the appropriate tools (arrows, bubbles, magnifiers, text, etc.) for annotation, indicates the trade of the task on which he is working and is experiencing the issue, saves the annotated photo, and sends the photo with his annotations to the document retrieval system 150. Optionally, the worker may send other data as well, for example video and imagery.

As mentioned above in use case 1, the document retrieval system 150 uses the lookup table 300 of the 2D Drawing repository 165 with the location metadata received from the worker 1120 in order to determine which 2D drawings are relevant for trade executed by the worker 112. The document retrieval system 150 retrieves relevant 2D drawings as follows.

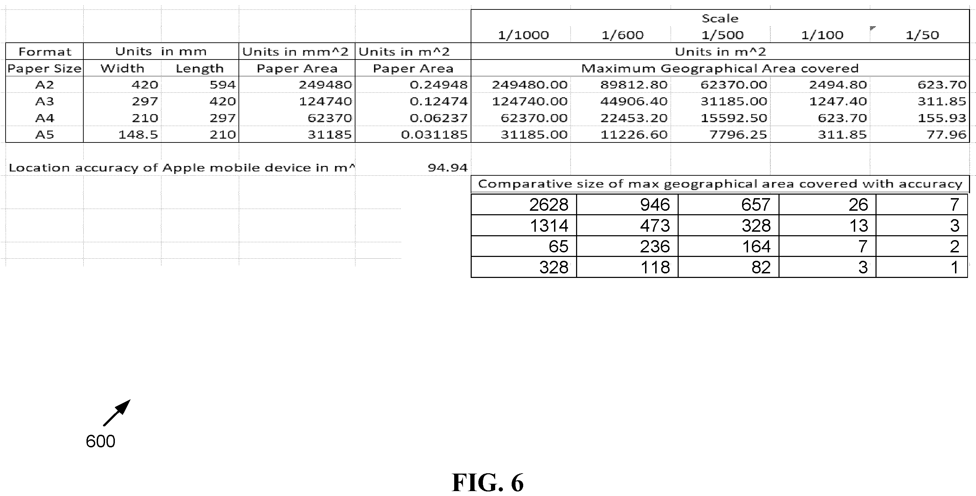

The chart shown in FIG. 6 compares the maximum geographical area covered by a given paper size format at a given scale with the horizontal error of the measurement. In these calculations, paper size is larger than the drawing size but gives a good estimate of the results with current mobile and reference devices. Studies have shown that in urban environment outdoors, the accuracy of an Apple mobile device is within 7 to 13 meters, this is to compare with Garmin GPS Map 66 which has a Root Mean Square Error (RMSE) below 1 meter. Most Apple systems use non military GPS signals. Pre-operational signals are already available on the iPhone 14 and other phones, and used as a dual band. As the constellation of satellites increases and comes into operation, mobile devices accuracy (including improvement of elevation accuracy) is expected to improve significantly. As of the filing date of this document, USA, Galileo, Beidou and QZSS have approximately 61 operational satellites in the total constellation. The planned launches represent an additional 67 satellites, doubling the satellites which can be in the line of sight of a mobile device. Accuracy of reference devices is generally found to be significantly better than the one from mobile devices. With an estimated accuracy of the location within 94.94 square meters, the chart 600 determines the current multiple in size of the paper size of the 2D drawing relative to the area of accuracy of the metadata supplied. With impeded reception of the signals, the percentage of errors to find the correct 2D drawing(s) may require multiple reference devices.

The mobile device 110 of the worker 112 originating the request receives the relevant 2D drawings or 2D rasterized drawings sent back to the worker 112. The documents are generally sent by the document retrieval system 150 as 2D rasterized drawings in order to facilitate simple annotations and to speed the transfer. The worker 112 annotates the 2D drawing(s) by showing the detailed location of the issue. The annotated 2D drawing is added to the package of photo, video, imagery, metadata, annotations and sent back to the system.

The issues received by the document retrieval system 150 may cover many causes such as incorrect design, improper or defective material or product, used product needing replacement or part replacement, dilapidated material, improper installation, removal of prior work from another trade required before work can be pursued, and many more.

Following the communication of the issue and proposal, and upon approval, the link to the relevant business process is provided. For example, if the issue is approved as a design change by the designer team, then the link launches a business process to edit the 2D drawing. If the issue is approved as a material or product issue, then the link launches a business process for supplier and/or reception issue. If the issue is approved as an installation problem, or out of sequence work, then the link launches a business process for a rework with potentially a resupply.

The initial accuracy of the positioning is defined by the 2D drawings that have accurate locations of the geodetic points and the added reference points. The designer receives the annotated drawings with their metadata from the worker and places it on a 2D drawing. The location provided by the received metadata and the location annotated on the 2D drawing are stored and deviations are analyzed to understand their root causes, for example, if the geographic location of the drawing in the 2D drawing repository needs to be adjusted, if the geographic location received from the own metadata of the mobile device need to be compensated in the future, or if the geographic location received from the indirect metadata of the reference device to the mobile device need to be compensated in the future. This is a cumulative process over multiple issues received from the site that improves the geolocation of the different parts of the asset in the repository. While the above example describes actions of the designer, some or all of these steps may be automated by the document retrieval system 150.

The document management system may preserve all communications from mobile devices 110 to the 2D Drawing repository 165 to enable traceability and auditability. Similarly, all the states of the 2D drawings in the repository 165 may be traceable and auditable.

The present embodiment provide many advantages over previous document retrieval systems. Workers on sites using 2D drawings represent the majority of the team members of an activity in many domains, for example Architecture, Engineering, and Construction (approx. 85%), Cities, Territorialities and Public Services (approx. 50%), Fixed Assets, (approx. 50%), and Manufacturing (approx. 10% or more), amongst others.

An individual may use the embodiments, for example, for a building audit for energetic performance evaluation, to assess if renovation of an asset is required, for routine duty on a plant, and to ascertain safety and status of equipment on a large asset (leak, noisy equipment, heat, or fumes). The embodiments are similarly appropriate for collaborative use with others located at the site or others remotely located.

For all of their underlying complex functionality, the embodiments may be relatively simple to deploy, involving familiar mobile devices (tablets, phones), and relatively few user clicks for communicating an issue between worker and either an on site supervisor/manager or off site resources, such as a design office, planning office, procurement office, etc. The embodiments may leverage existing annotation software to create the metadata that is typically preloaded on mobile devices.

The embodiments advantageously provide rapid accessibility to relevant 2D drawings and 2D rasterized drawings, namely providing immediate control by the system of access permissions granted to the worker, and immediate communication to the data package containing all factual resources to resolve the issue. There is no longer a need for someone to handle a document request in the office or available on a help line to search among all 2D drawings and 2D rasterized drawings to provide the needed document.

Each 2D drawing of the repository is unique due to a check-in/ check-out methodology. The designer can add all the annotation data of the worker received on the 2D rasterized drawing as a layer to the proper 2D drawing because their representation is strictly identical. No special conversion is needed for the annotation layer.

The accuracy of repository improves with use: the more issues received by the repository from a site, the more accurate it will be using the analysis of deviations in the geolocation of the 2D drawings for that site.

The embodiments may address multiple issues with different workers on the same 2D drawing. 2D rasterized drawings are copied from the same original 2D drawing when multiple workers encounter different issues connected to the same 2D drawing. This enables each of these workers to annotate his copy of the 2D rasterized drawing. Each set of annotations provided by the worker to the designer can be represented by a layer and added to the 2D drawing until design changes are made. This also guarantees that the unicity of the original 2D drawing and ensued editing is maintained through the check-in check-out methodology.

The embodiments improve agility and efficiency in business processes. Upon triage of each issue captured by the worker, the embodiments may launch a relevant business process. The recipient handling the next steps of that business process has access to all pertinent and relevant data to implement the solution. This agility accelerates the resolution of issues and increases productivity.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1. A method for accessing a 2D drawing in a document retrieval system from a work site, comprising the steps of:

   configuring a reference device at the work site to provide a geographical reference to a mobile device at the remote work site;
   receiving an annotated document from the mobile device by a document retrieval system in communication with a document repository configured to store a plurality of two dimensional (2D) drawings;
   accessing the 2D drawing in the document repository by the document retrieval system based on the annotated document; and
   providing a rasterized version of the 2D drawing to the mobile device,
   wherein the work site is remotely located from the document retrieval system.

2. The method of claim 1, further comprising the step of the document retrieval system receiving a current task completion status from the mobile device.

3. The method of claim 1, wherein a first group of a planning, management, renovation, audit, building, maintenance, and demolition project from the second group of architecture, engineering, and construction is located at the work site.

4. The method of claim 1, wherein the annotated document comprises annotation metadata comprising location data received from the reference device;

preferably further comprising the step of annotating the 2D drawing according to the annotated document, more preferably further comprising the step of storing the annotated 2D drawing and/or the annotated submitted drawing by the document retrieval system.

5. The method of claim 1, wherein the annotated document comprises a photograph.

6. The method of claim 1, wherein the annotated document indicates a discrepancy between the accessed 2D drawing and a corresponding feature represented by the accessed 2D drawing at the work site.

7. The method of claim 1, wherein the 2D drawing comprises identifying design and trade metadata, preferably wherein the identifying design and trade metadata comprises a field selected from the group of a trade field, a sheet number, a sheet name, and a computer assisted drafting (CAD) stage.

8. The method of claim 1, wherein the 2D drawing is a vector drawing.

9. The method of claim 1, wherein the reference device comprises an indoor positioning system (IPS) device.

10. A method for adding geographical reference data to a two dimensional (2D) drawing, comprising the steps of:

finding existing geo-referenced points in the 2D drawing;
converting the geo-referenced points to Universal Transverse Mercator (UTM) coordinates; and
adding a new geo-referenced point to the 2D drawing.

11. The method of claim 10, further comprising

- the step of adding geo-referenced points to a corner of the 2D drawing; or
- the steps of:

- defining a true north coordinate system for the 2D drawing;
- extracting a polyline of borders of the 2D drawing;
- defining a smallest quadrilateral space of the 2D drawing orienting north-south and east-west; and
-- calculate the UTM coordinates of each of the 2D drawing corners.

12. The method of claim 10, wherein the 2D drawing is a vector drawing.

13. A system for accessing to a remotely located two dimensional (2D) drawing via a mobile device at a work site, comprising:

a reference device configured to provide a geographical reference to the mobile device;
a document repository configured to store a plurality of 2D drawings;
a document retrieval system configured to access the plurality of 2D drawings in the document repository, wherein the mobile device is configured to provide an annotated document to the document retrieval system, the document retrieval system is configured to access the 2D drawing in the document repository based on the annotated document, and the document retrieval system is configured to provide a rasterized version of the 2D drawing to the mobile device.

14. The system of claim 13, wherein:

- the annotated document comprises annotation metadata comprising location data received from the reference device; or
- the annotated document comprises a photograph; or
- the 2D drawing comprises identifying design and trade metadata; or
- the identifying design and trade metadata comprises a field selected from the group of a trade field, a sheet number, a sheet name, and a computer assisted drafting (CAD) stage; or
- the 2D drawing is a vector drawing; or
- the reference device comprises an indoor positioning system (IPS) device.

**15.** A computer program comprising instructions, which when executed by a computer, cause the computer to perform the method of any one of claims 1 to 9 and/or 10 to 12.

**FIG. 1**

Set up a repository for 2D drawings in a document retrieval
system
210

Select a mobile device to access the repository
220

Select and set up a reference device to provide a geographical
reference for the mobile device
230

Access relevant 2D drawings from the repository by the mobile
device
240

Use the retrieval system to communicate an issue to relevant
parties
250

200

**FIG. 2**

| Site<br>Asset<br>Cover Sheet (SD, CD, DD) – Issued for Permit and Construction?<br>Summary | | | | | | | | | | | |
|---|---|---|---|---|---|---|---|---|---|---|---|
| 305 | | | | | | | | | | | |
| | 310<br>Plane<br>Level | 320<br>2D Type | 322<br>Symbol | 324<br>2D<br>No. | 326<br>2D Drawing Title w/<br>Plan | 330<br>Level | 340<br>Elevation | 351<br>LL<br>Corner | 352<br>UL<br>Corner | 353<br>UR<br>Corner | 354<br>LR<br>Corner |
| | Lowest<br>:<br>Middle<br>:<br>Top | | | | | | | | | | |

300

**FIG. 3**

EP 4 502 826 A1

Find existing geo-referenced points in current 2D drawings
410

Convert geo-referenced points to UTM coordinates
420

Define a processing order to add new geo-reference points to the 2D drawings
430

Add geo-reference points to corners of the 2D drawing
440

Extract a polyline of the borders of the 2D drawings
450

Define the smallest quadrilateral space orienting north-south and east-west and englobe the 4 corners of the 2D drawing
460

Calculate the UTM coordinates of each of the four corners
470

400

**FIG. 4**

**FIG. 5**

| Format | Units in mm | | Units in mm^2 | Units in m^2 | Scale | | | | |
| | | | | | 1/1000 | 1/600 | 1/500 | 1/100 | 1/50 |
| | | | | | Units in m^2 | | | | |
| Paper Size | Width | Length | Paper Area | Paper Area | Maximum Geographical Area covered | | | | |
| A2 | 420 | 594 | 249480 | 0.24948 | 249480.00 | 89812.80 | 62370.00 | 2494.80 | 623.70 |
| A3 | 297 | 420 | 124740 | 0.12474 | 124740.00 | 44906.40 | 31185.00 | 1247.40 | 311.85 |
| A4 | 210 | 297 | 62370 | 0.06237 | 62370.00 | 22453.20 | 15592.50 | 623.70 | 155.93 |
| A5 | 148.5 | 210 | 31185 | 0.031185 | 31185.00 | 11226.60 | 7796.25 | 311.85 | 77.96 |

Location accuracy of Apple mobile device in m^    94.94

| Comparative size of max geographical area covered with accuracy | | | | |
| --- | --- | --- | --- | --- |
| 2628 | 946 | 657 | 26 | 7 |
| 1314 | 473 | 328 | 13 | 3 |
| 65 | 236 | 164 | 7 | 2 |
| 328 | 118 | 82 | 3 | 1 |

600

**FIG. 6**

EP 4 502 826 A1

Europäisches
Patentamt

European
Patent Office

Office européen
des brevets

# EUROPEAN SEARCH REPORT

**Application Number**

EP 24 19 2103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/206140 A1 (CHEN ZIJIE [CN] ET AL) 4 July 2019 (2019-07-04) * the whole document * | 1-15 | INV. G06F16/587 H04W4/02 |
| X | US 2022/397400 A1 (ADEGBENRO ADELEKE ADEWUNMI [US]) 15 December 2022 (2022-12-15) * the whole document * | 1-15 | |
| A | MUHAMMAD USMAN ALI ET AL: "IoT enabled Wi-Fi indoor positioning system using raster maps", INFORMATION PROCESSING IN SENSOR NETWORKS, ACM, 2 PENN PLAZA, SUITE 701NEW YORKNY10121-0701USA, 16 April 2019 (2019-04-16), pages 327-328, XP058433784, DOI: 10.1145/3302506.3312612 ISBN: 978-1-4503-6284-9 * the whole document * | 1-15 | |
| A | NETZEL P ET AL: "Comparison of different implementations of a raster map calculator", COMPUTERS & GEOSCIENCES, PERGAMON, AMSTERDAM, NL, vol. 154, 14 May 2021 (2021-05-14), XP086612140, ISSN: 0098-3004, DOI: 10.1016/J.CAGEO.2021.104824 [retrieved on 2021-05-14] * abstract * | 1-15 | TECHNICAL FIELDS SEARCHED (IPC) G06F H04W |

-/--

The present search report has been drawn up for all claims

| Place of search | Date of completion of the search | Examiner |
|---|---|---|
| Munich | 11 November 2024 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 19 2103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PETER BEAT ET AL: "Using Vector and Raster-Based Techniques in Categorical Map Generalization", THIRD ICA WORKSHOP ON PROGRESS IN AUTOMATED MAP GENERALIZATION, 1 January 1999 (1999-01-01), pages 1-14, XP093188658, Ottawa Canada * abstract * | 1-15 | |

TECHNICAL FIELDS
SEARCHED     (IPC)

The present search report has been drawn up for all claims

| Place of search | Date of completion of the search | Examiner |
|---|---|---|
| Munich | 11 November 2024 | Weidmann, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                               
& : member of the same patent family, corresponding
document

EPO FORM 1503 03.82 (P04C01)

**EP 4 502 826 A1**

## ANNEX TO THE EUROPEAN SEARCH REPORT
## ON EUROPEAN PATENT APPLICATION NO.

EP 24 19 2103

11-11-2024

| Patent document cited in search report | Publication date | Patent family member(s) | | Publication date |
|---|---|---|---|---|
| US 2019206140 A1 | 04-07-2019 | CN | 107979628 A | 01-05-2018 |
| | | US | 2019206140 A1 | 04-07-2019 |
| | | WO | 2018076975 A1 | 03-05-2018 |
| US 2022397400 A1 | 15-12-2022 | NONE | | |

EPO FORM P0459

For more details about this annex : see Official Journal of the European Patent Office, No. 12/82